(19) **Europäisches Patentamt / European Patent Office / Office européen des brevets**

(11) **EP 1 488 191 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **03702422.1**

(22) Anmeldetag: **13.01.2003**

(51) Int Cl.:
***G01B 21/04*** (2006.01)

(86) Internationale Anmeldenummer:
**PCT/EP2003/000217**

(87) Internationale Veröffentlichungsnummer:
**WO 2003/081168 (02.10.2003 Gazette 2003/40)**

(54) **VERFAHREN ZUR BESTIMMUNG UND KORREKTUR VON FÜHRUNGSFEHLERN BEI EINEM KOORDINATENMESSGERÄT**

METHOD FOR DETERMINING AND CORRECTING GUIDING ERRORS IN A COORDINATE MEASURING DEVICE

PROCEDE POUR DETERMINER ET CORRIGER DES ERREURS DE CONDUITE DANS UN APPAREIL DE MESURE DE COORDONNEES

(84) Benannte Vertragsstaaten:
**DE FR GB IT**

(30) Priorität: **26.03.2002 DE 10214490**

(43) Veröffentlichungstag der Anmeldung:
**22.12.2004 Patentblatt 2004/52**

(73) Patentinhaber: **Carl Zeiss Industrielle Messtechnik GmbH**
**73447 Oberkochen (DE)**

(72) Erfinder:
• **GRUPP, Günter**
  **89558 Böhmenkirch (DE)**
• **FUCHS, Andreas**
  **73434 Aalen (DE)**

• **JENISCH, Walter**
  **89520 Heidenheim (DE)**
• **BERNHARDT, Ralf**
  **73432 Aalen (DE)**
• **SCHMID, Harald**
  **73447 Oberkochen (DE)**
• **STAADEN, Ulrich**
  **73431 Aalen (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
EP-A- 0 687 890     US-A- 4 939 678
US-A- 5 610 846

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung und Korrektur von Führungsfehlern bei einem Koordinatenmessgerät mit einem beweglichen Messkopf und mit Mitteln zur beweglichen Führung des Messkopfes in wenigstens zwei verschiedenen Raumrichtungen und mit Skalen und Messlinien, die den Raumrichtungen zugeordnet sind, wobei sich die Messlinien verschiedener Raumrichtungen schneiden und wobei zu vorbestimmten Werten der Skalen längs der Messlinien Korrekturwerte ermittelt werden, um Fehler der Skalen und/ oder der Mittel zur beweglichen Führung des Messkopfes zu korrigieren.

Die Erfindung betrifft ferner ein Koordinatenmessgerät, das das obengenannte Verfahren verwendet, sowie eine Vorrichtung zur Bestimmung und Korrektur elastischer Führungsfehler bei einem Koordinatenmessgerät und ein Korrekturwertspeichermedium zur Speicherung von Korrekturwerten für ein Koordinatenmessgerät. Ein Verfahren, ein Koordinatenmessgerät, eine Vorrichtung zur Bestimmung und Korrektur elastischer Führungsfehler bei einem Koordinatenmessgerät und ein Korrekturwertspeiche'rmedium der eingangs genannten Art sind jeweils aus der DE 33 34 460 A1 bekannt.

Nach dieser Schrift wird der Verschiebeweg eines Messkopfes eines Koordinatenmessgerätes interferometrisch erfasst. Der interferometrisch erfasste Wert wird durch eine Auswertevorrichtung mit Werten für den Verschiebeweg verglichen, die von einer Skalierung, beispielsweise einer optisch und/oder elektrisch abtastbaren Folge mechanischer Markierungen, geliefert werden. Abweichungen zwischen den von den Skalen gelieferten und den durch die interferometrische Erfassung bereitgestellten Werten werden gespeichert und im Betrieb des Koordinatenmessgerätes zur Korrektur der von den Skalen gelieferten Werte verwendet.

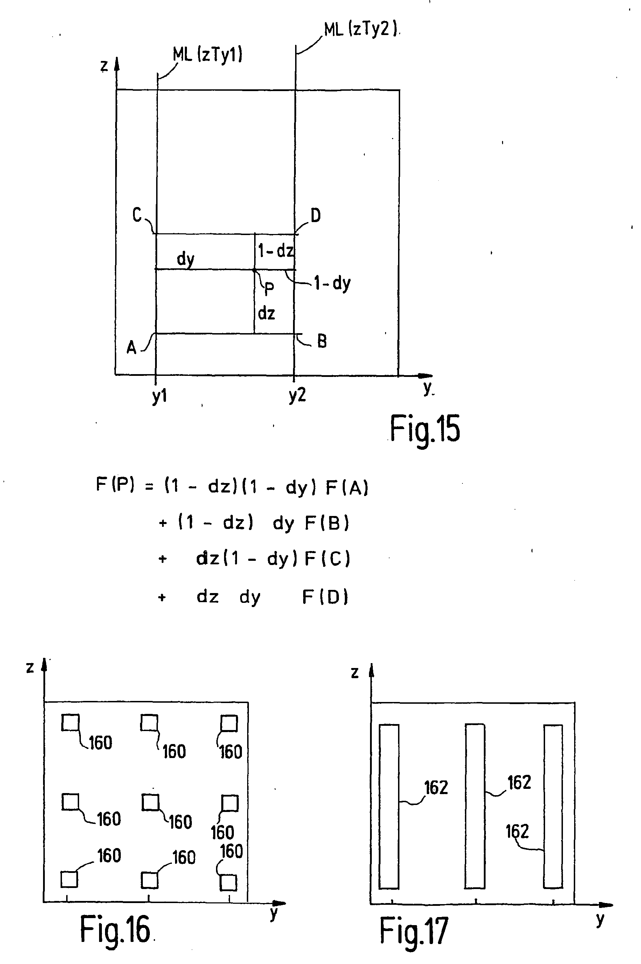

Auf diese Weise können sogenannte Führungsfehler im Betrieb des Koordinatenmessgerätes korrigiert werden. Es versteht sich, dass die Führungsfehler nicht nur interferometrisch, sondern auch durch andere Messmittel bestimmt werden können. Vergleiche dazu weiter unten Figuren 16 und 17 mit der zugehörigen Beschreibung. Unter einem Führungsfehler versteht man eine Abweichung der Ist-Koordinaten des Messkopfes von den Koordinaten, die in dieser Stellung von der Skalierung geliefert werden. Dabei werden die Ist-Koordinaten von den Stellungen der Führungen bestimmt.

Bei ideal steifen Führungen können solche Abweichungen zwischen Soll- und Ist-Positionen durch geometrische Fehler der Führungen und/oder der Skalen bedingt sein. Zum Beispiel kann eine Führung, die eine Translation des Messkopfes führt, eine fertigungsbedingte Welligkeit aufweisen, was Querabweichungen der Messkopfposition relativ zur Richtung der Translation zur Folge hat.

Zur Korrektur dieser Fehler wird beispielsweise längs jeder Achse des Koordinatenmessgerätes eine einzelne Messlinie (Standardlinie) definiert, zu der beispielsweise interferometrisch Korrekturwerte bestimmt werden (Standardverfahren). Korrekturwerte zu Punkten, die abseits der Standard-Messlinien im Messvolumen liegen, ergeben sich bei steifen Führungen durch rechnerische Interpolation auf der Basis von gemessenen Korrekturwerten der einzelnen Standard-Messlinien.

Reale Koordinatenmessgeräte besitzen jedoch Führungen, die nicht ideal steif sind. Reale Führungen weisen eine Elastizität auf, die durch die verwendeten Werkstoffe und Strukturen bestimmt wird. Aufgrund dieser Elastizität kommt es zu Verformungen des Koordinatenmessgerätes, die sich als Abweichungen zwischen den Ist-Koordinaten und den von den elastisch verformten Skalen gelieferten Koordinaten und damit als Fehler bemerkbar machen. Bei einem Messkopf, der am Ende eines quer zur Schwerkraftrichtung ausfahrbaren Messarms angebracht ist, wird beispielsweise eine Durchbiegung des Messarms auftreten, die mit zunehmender Ausfahrlänge wächst. Eine solche Durchbiegung verursacht einen elastisch bedingten Positionsfehler des Messkopfes in der Richtung der Durchbiegung.

Derartige elastisch bedingte Fehler überlagern sich mit den geometrisch bedingten Führungsfehlern. Dabei ist problematisch, dass die elastisch bedingten Fehler und die geometrisch bedingten Fehler im allgemeinen von verschiedenen Einflüssen und Achsen oder Raumrichtungen abhängig sein können. Das oben beschriebene Standardverfahren ist auf die Korrektur' geometrisch bedingter Fehler gerichtet und daher im allgemeinen nicht optimal zur Korrektur elastisch bedingter Fehler geeignet. Eine Steigerung der Genauigkeit von Koordinatenmessgeräten erfordert jedoch auch eine Korrektur elastisch bedingter Fehler.

Aus der DE 195 18 268 A1 ist ein Verfahren zur Koordinatenmessung an Werkstücken bekannt, bei dem das elastische Biegeverhalten von Koordinatenmessgeräten durch eine Deformationsmatrix nachgebildet wird. Dieses bekannte Verfahren liefert eine gute Korrekturqualität, erfordert aber einen hohen Mess- und Rechenaufwand zur Bestimmung der Koeffizienten der Deformationsmatrix.

US 4 939 678 offenbart ein Verfahren zur Bestimmung und Korrektur von Führungsfehlern bei Koordinatenmessgeräten.

Vor diesem Hintergrund besteht die Aufgabe der Erfindung darin, eine qualitativ hochwertige Korrektur auch von Messfehlern, die durch elastische Verformungen der Messapparatur bedingt sind, zu ermöglichen. Dabei soll der erforderliche Messaufwand in Grenzen gehalten werden, um eine Verwendung der erfindungsgemäßen Korrektur im Rahmen einer industriellen Fertigung von Koordinatenmessgeräten zu ermöglichen.

Diese Aufgabe wird bei einem Verfahren, einem Koordinatenmessgerät, einer Vorrichtung zur Bestimmung und Korrektur elastischer Führungsfehler und einem Korrekturwertspeichermedium der eingangs genannten Art dadurch gelöst, dass Korrekturwerte einer Messlinie einer ersten Raumrichtung so verändert werden, dass der Korrekturwert dieser Messlinie im Schnittpunkt mit einer Messlinie einer anderen Raumrichtung einen vorbestimmten Wert annimmt.

Dieses Verfahren hat zur Folge, dass die veränderten'Korrekturwerte längs der Messlinie der ersten Raumrichtung nur noch relative Änderungen mit Bezug auf den vorbestimmten Wert widerspiegeln, während die Absolutwertinformation durch die Veränderung entfallen ist. Der Absolutwert enthielt unter Umständen noch einen unbekannten, aus dem Messvorgang resultierenden Offset und war zusätzlich mit Fehlereinflüssen der zweiten Raumrichtung behaftet. Das Verändern der Korrekturwerte so, dass sich im Schnittpunkt ein vorbestimmter Wert einstellt, liefert den Vorteil, dass diese unerwünschten Einflüsse der anderen Raumrichtung und des Offsets eliminiert werden, so dass die verbleibenden, geänderten Korrekturwerte der ersten Raumrichtung nicht mehr von diesen Einflüssen abhängig sind.

Auf diese Weise wird gewissermaßen ein Bezug zwischen sich schneidenden Messlinien hergestellt, der dann als Folge auch einen Bezug zwischen parallel verlaufenden Messlinien, die von einer Quer-Messlinie geschnitten werden, ermöglicht. Dieser Bezug zwischen parallelen Messlinien stellt eine Voraussetzung der erfindungsgemäßen Korrektur elastisch-bedingter Fehler mit Hilfe paralleler Messlinien dar.

Gemäß einer vorteilhaften Ausgestaltung erfolgt die Veränderung der Korrekturwerte durch Verknüpfen mit einem additiven Offset.

Dieses Vorgehen zeichnet sich durch einen äußerst geringen rechnerischen Aufwand aus.

Gemäß einer weiteren Ausgestaltung ist der vorbestimmte Wert gleich Null.

Dadurch, dass nur Abweichungen von Null gespeichert werden müssen, ergibt sich als Vorteil ein sehr geringer Speicherplatzbedarf.

Nach einer weiteren Ausgestaltung werden der ersten Raumrichtung mehrere Messlinien zugeordnet, die längs dieser Raumrichtung verlaufen.

Die Verwendung mehrerer Messlinien in einer Raumrichtung ermöglicht in Verbindung mit dem erfindungsgemäßen Bezug auf einen vorbestimmten Wert eine quantitative Erfassung elastischer Einflüsse quer zu der ersten Raumrichtung.

Eine weitere Ausgestaltung der Erfindung sieht eine weitere Änderung der Korrekturwerte in Abhängigkeit von einer zweiten Messlinie der zweiten Raumrichtung vor.

Diese Ausgestaltung erlaubt eine Kompensation von Effekten, die durch unerwünschte Abweichungen der Messlinienrichtungen von Soll-Richtungen beim Aufnehmen der zugehörigen Fehler oder Korrekturwerte verursacht werden.

Eine Ausführungsform dieser Ausgestaltung zeichnet sich dadurch aus, dass eine Kurve, die die Korrekturwerte der Messlinie verbindet, die in der ersten Raumrichtung verläuft, so manipuliert wird, dass der Korrekturwert dieser Messlinie im Schnittpunkt mit der zweiten Messlinie der zweiten Raumrichtung nach der Manipulation einen vorbestimmten Wert annimmt.

Diese Ausführungsform erlaubt vorteilhafterweise eine rechnerisch einfache Kompensation der obengenannten unerwünschten Effekte.

Nach einer weiteren Ausführungsform dieser Ausgestaltung ist der vorbestimmte Wert gleich Null. Gemäß einer weiteren Ausführungsform wird die Kurve außerhalb eines Fixpunktes manipuliert, der durch den vorbestimmten Wert des geänderten Korrekturwertes dieser Messlinie im Schnittpunkt mit der ersten Messlinie der zweiten Raumrichtung gebildet wird.

Eine solche Manipulation kann beispielsweise durch die Gleichung $fg(xi) = f(xi) - (h/xh) * xi$ erhalten werden, wobei $f(xi)$ eine Folge von Korrekturwerten über Punkten $xi$ einer Messlinie einer ersten Raumrichtung darstellt und $h$ den Abstand des Korrekturwertes $f(xh)$ vom Wert Null im Schnittpunkt dieser Messlinie mit der zweiten Messlinie der zweiten Raumrichtung angibt. Dadurch erfolgt eine Manipulation der Kurve $f(xi)$ um den Nullpunkt herum.

Diese Ausführungsformen zeichnen sich ebenfalls durch eine einfache rechnerische Realisierung aus.

Gemäß einer weiteren Ausgestaltung der Erfindung werden die Messlinien der ersten Raumrichtung zusätzlich einer Rechtwinkligkeitsmessung in bezug auf die Normale der Ebene, die durch mehrere Messlinien der ersten Raumrichtung definiert ist, unterzogen. Weiter wird eine Abweichung der Rechtwinkligkeit jeweils einer einzelnen Messlinie von einem gemeinsamen Bezugswert gebildet und es folgt eine Manipulation der Kurven der Korrekturwerte der einzelnen Messlinien, wobei das Ausmaß der Manipulation von der genannten Abweichung bestimmt wird.

Diese Ausführungsform erlaubt vorteilhafterweise eine Kompensation von Abweichungen der Messlinienrichtungen von einem gewünschten Wert, die aus der Ebene der Messlinien herausführen.

Eine rechnerisch einfache Kompensation dieses Effektes ergibt sich nach einer weiteren Ausführungsform dadurch, dass das Ausmaß der Manipulation proportional zu der genannten Abweichung ist. Dabei umschreibt der Begriff der Manipulation jeweils beispielsweise eine Korrektur der Kurve durch Subtraktion einer Geraden.

Gemäß einer weiteren vorteilhaften Ausgestaltung werden die Korrekturwerte einer' vorbestimmten Messlinie aus einem Mehrfachfächer der längs der ersten Raumrichtung verlaufenden Messlinien von den zugehörigen Korrekturwerten dieser Messlinien subtrahiert.

Diese Subtraktion bewirkt, dass die verbliebenen relativen Korrekturen oder Fehler paralleler Messlinien auf die entsprechenden Werte einer Standardlinie bezogen werden. Da die geometrischen Fehler der betrachteten parallelen Messlinien gleich sind, bewirkt diese Subtraktion vorteilhafterweise eine Eliminierung dieser geometrischen Fehler mit der Folge, dass die verbliebenen Werte allein von elastisch bedingten Fehlern bestimmt werden.

Die auf diese Weise gewonnenen Daten für eine elastische Korrektur, bzw. für den zu korrigierenden elastisch-bedingten Fehler, sind damit unabhängig von den geometrische Führungsfehlern und können für einen Koordinatenmessgeräte-Typ entweder konstant gehalten werden oder durch einfache Messungen angepaßt werden.

Als weiterer Vorteil ist zu sehen, dass diese Daten für die elastische Korrektur nur langperiodische Anteile enthalten und deshalb vorteilhafterweise durch Filter bekannter Art geglättet werden können.

Bei jedem einzelnen Gerät einer Serie müssen Führungsfehler damit nur noch im Rahmen einer Standardabnahme ermittelt werden. Fehler aus elastischen Verformungen müssen dagegen nicht für jedes einzelne Koordinatenmessgerät neu bestimmt werden.

Als weiterer Vorteil ist zu sehen, dass sich die Herkunft der Korrekturdaten entsprechend der aufgezeigten Trennung nachvollziehen und separat visualisieren läßt.

Damit ergibt sich auch die Möglichkeit, die einzelnen Korrekturen (Geräte-individuell-elastisch und -geometrisch, Baureihenallgemein-elastisch) auf einfache Art und Weise separat ausund einschalten.

Weiter kann auch die Reihenfolge der Korrektur von Geräte-individuellen Führungsfehlern und Baureihen-typischen elastischen Fehlern bei einer zweistufigen Korrektur beliebig vorgegeben werden.

Vorteilhafterweise werden dazu die Korrekturwerte der vorbestimmten längs der ersten Raumrichtung verlaufenden Messlinie (Standardlinie) als erste Korrekturwerte in einem Korrekturwertspeicher gespeichert.

Diese ersten Korrekturwerte werden vorteilhafterweise für ein individuelles Koordinatenmessgerät individuell ermittelt und gespeichert. Sie enthalten die Geräte-individuellen geometrischen Führungsfehler und Geräte-individuellen Anteile der elastischen Fehler.

Eine weitere Ausführungsform sieht vor, dass die bei der Subtraktion erhaltenen Ergebnisse als zweite Korrekturwerte in dem Korrekturwertspeicher gespeichert werden.

Diese zweiten Korrekturwerte enthalten Baureihen-typische und damit nicht Geräte-individuelle Anteile elastisch bedingter Fehler. Vorteilhafterweise werden diese zweiten Korrekturwerte bei einem individuellen Koordinatenmessgerät eines bestimmten Typs ermittelt und in Korrekturwertspeichern anderer Messgeräte des gleichen Typs gespeichert. Damit ist der besonders große Vorteil verbunden, dass die über die Standardabnahme hinausgehenden Messungen nicht bei jedem individuellen Gerät vorgenommen werden müssen. Statt dessen reicht es aus, diese bei einzelnen Geräten einer Baureihe stellvertretend für die anderen Geräte der Baureihe aufzunehmen.

Gemäß einer Ausgestaltung der Erfindung werden Führungsfehler von Koordinatenmessgeräten im Betrieb der Koordinatenmessgeräte auf der Grundlage der ersten und der zweiten Korrekturwerte korrigiert. Diese Art der Korrektur erlaubt eine Korrektur sowohl der geometrischen und Geräte-individuellen elastischen Fehlern auf der einen Seite als auch der Baureihen-typischen elastischen Fehler auf der anderen Seite. Diese Korrektur kann durch eine Absolutfehlerinformation, die bei der Aufnahme von Standardlinien gewonnen wird, ergänzt werden.

Gemäß einer weiteren Ausgestaltung der Erfindung werden Korrekturwerte für Punkte, die nicht auf den Messlinien liegen, durch Interpolation von Korrekturwerten von wenigstens zwei Messlinien ermittelt.

Die Interpolation ermöglicht eine Beschränkung der Zahl der aufzunehmenden Messlinien, da sie eine Gewinnung von Korrekturwerten zwischen den Messlinien durch ein rechnerisches Verfahren ermöglicht. Dabei setzt diese Interpolation, wie weiter oben bereits angemerkt wurde, einen gemeinsamen Bezug zwischen den Messlinien voraus.

Die Interpolation kann auf einem Flächeninterpolationsverfahren oder einem räumlichen Interpolationsverfahren basieren.

Ein typisches Koordinatenmessgerät, das sich für eine Verwendung der genannten Verfahren eignet, ist ein Horizontalarm-Messgerät, das einen in X-Richtung beweglichen Ständer besitzt, der einen in Y-Richtung und in Z-Richtung beweglichen Horizontalarm mit einem Messkopf trägt. Aufgrund der beim Ausfahren des Horizontalarms auftretenden elastischen Verformungen ergeben sich die obengenannten Vorteile bei einem solchen Koordinatenmessgerät in besonderem Maße.

Die Anwendung der Erfindung beschränkt sich aber nicht auf ein derartiges Horizontalarm-Messgerät, sondern kann bei jedem Koordinatenmessgerät, bei dem elastische Verformungen auftreten, angewendet werden. Ein Beispiel eines weiteren Koordinatenmessgerätes ist ein sogenanntes Portalgerät, das ein Portal aufweist, das in Y-Richtung beweglich ist und einen in X-Richtung auf dem Portal beweglichen Wagen aufweist, der eine in Z-Richtung bewegliche Pinole mit einem Messkopf trägt. Koordinatenmessgeräte in Auslegerbauweise oder mit beliebigen anderen kinematischen Ketten stellen weitere Anwendungsbeispiele dar.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 ein Horizontalarm-Messgerät als Beispiel eines Koor- dinatenmessgerätes;

Fig. 2 die Struktur einer Auswertevorrichtung aus der Fig. 1;

Fig. 3 eine Darstellung zur Veranschaulichung translatori- scher Fehler;

Fig. 4 eine Darstellung zur Veranschaulichung rotatorischer Fehler;

Fig. 5 den Verlauf eines auf die X-Achse bezogenen rotatori- schen Fehlers bei verschiedenen Bewegungen des Mess- kopfes des Horizontalarm-Messgerätes aus Fig. 1;

Fig. 6 ein Lasermessgerät zur Aufnahme der translatorischen und rotatorischen Fehler;

Fig. 7 eine Prinzip-Darstellung zur Erläuterung einer Geradheitsmessung;

Fig. 8 zwei auf die Y-Achse bezogene Verläufe rotatorischer Fehler mit verschiedenen Fehleranteilen;

Fig. 9 Winkelfehler beim Aufnehmen von Messwerten längs be- stimmter Messlinien;

Fig. 10 Auswirkungen dieser Winkelfehler;

Fig. 11 Ergebnisse einer Korrektur dieser Winkelfehler;

Fig. 12 einen Mehrfachfächer von Messlinien mit einer Stan- dardlinie und zwei zusätzlichen Mehrfachlinien;

Fig. 13 eine qualitative Darstellung verbleibender Fehler nach Beseitigung des Offsets;

Fig. 14 eine qualitative Darstellung verbleibender Fehler nach Normierung der Mehrfachlinien aus der Fig. 12 auf die Standardlinie der Fig. 12;

Fig. 15 geometrische Zusammenhänge zu einem Flächeninterpola- tionsverfahren;

Fig. 16 und

Fig. 17 Alternativen zum Aufnehmen von Messlinien mit Hilfe von mechanischen Kalibriervorrichtungen anstelle des Lasermessgerätes der Fig. 6.

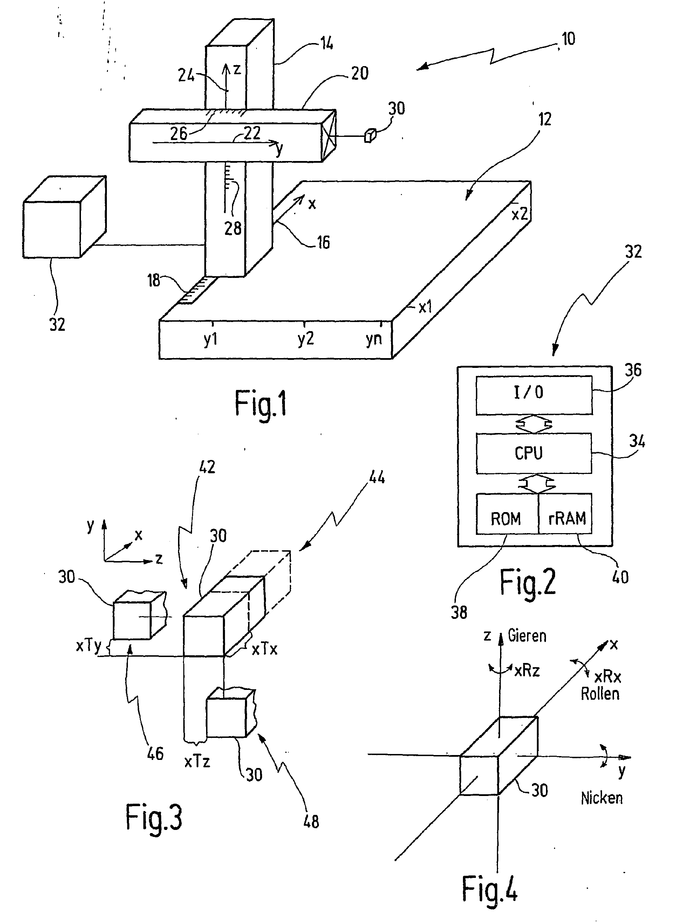

In Fig. 1 bezeichnet Ziffer 10 eine Gesamtansicht eines Horizontalarm-Messgerätes als Beispiel eines Koordinatenmessgerätes. Das Horizontalarm-Messgerät 10 weist eine Bezugsebene 12 auf, auf der ein Ständer 14 längs einer X-Richtung 16 beweglich ist. Die Bezugsebene 12 ist beispielsweise ein Messtisch oder eine möglichst ebene Fläche im Raum. Die Position des Ständers 14 kann auf einer X-Skala 18 abgelesen werden. Der Ständer 14 trägt einen in Y-Richtung 22 und Z-Richtung 24 beweglichen Horizontalarm 20. Die Y-Position des Horizontalarms 20 sowie seine Z-Position kann jeweils auf einer Y-Skala 26 und einer Z-Skala 28 abgelesen werden. Der Horizontalarm 20 trägt einen Messkopf 30, mit dem Werkstückpositionen oder Bauteile angefahren werden können. Die bei der Berührung der Bauteile durch den Messkopf 30 erreichten X-, Y- und Z-Positionen können an den genannten Skalen abgelesen werden und/ oder werden durch eine geeignete Sensorik erfasst und an eine Auswertevorrichtung 32 zur weiteren Verarbeitung übermittelt.

Fig. 2 veranschaulicht die Struktur einer solchen Auswertevorrichtung 32. Danach vermittelt eine Recheneinheit 34 zwischen Eingabeteilen und Ausgabeteilen einer Eingabe- und Ausgabevorrichtung 36 nach Maßgabe von in einem Programmspeicher 38 gespeicherten Programmen und unter Verwendung von in einem Korrekturwertspeicher 40 gespeicherten Daten.

Fig. 3 veranschaulicht translatorische Fehler, wie sie im Betrieb des Koordinatenmessgerätes und des Horizontalarm-Messgerätes 10 auftreten. Dabei bezeichnet die Ziffer 42 eine fehlerfreie Position des Messkopfs 30. Die Ziffer 44 bezeichnet dagegen eine Position des Messkopfs 30, die sich von der fehlerfreien Position um eine Strecke xTx unterscheidet. Dabei bezeichnet das erste x (links), die Bewegungsrichtung des Messkopfes, der Buchstabe T zeigt an, dass es sich bei der Bewegung um eine Translation handelt und das zweite x (rechts) gibt die Richtung des dargestellten Fehlers an. xTx entspricht damit einem Positionsfehler in X-Richtung, der bei einer Translation in X-Richtung auftritt. Eine typische Ursache für einen solchen Fehler wäre beispielsweise eine Ungenauigkeit der X-Skala 18.

Die Ziffer 46 bezeichnet die Position des Messkopfs 30 mit einem Positionsfehler in Y-Richtung. Dieser Fehler wird hier als xTy notiert. xTy stellt damit gewissermaßen eine Geradheitsabweichung dar. Ein solcher Fehler wird beispielsweise durch eine Welligkeit der X-Führung verursacht, die bei einer Translation in Richtung der X-Achse eine Querabweichung y zur Folge hat.

Die Ziffer 48 bezeichnet die Position des Messkopfs 30 mit einem Positionsfehler xTz in Z-Richtung. Auch hier liegt der Notation eine translatorische Bewegung in X-Richtung zugrunde, was durch die ersten beiden Buchstaben x und T ausgedrückt wird. Die Querabweichung in Z-Richtung kommt typischerweise, wie auch die vorstehend beschriebene Querabweichung in Y-Richtung, durch eine Welligkeit (Ungeradheit) der X-Führung zustande.

Fig. 3 zeigt translatorische X-, Y- und Z-Fehler bei Bewegungen in Richtung der X-Achse. Analog treten X-, Y- und Z-Fehler beim Bewegen in Richtung der Y-Achse und beim Bewegen in Richtung der Z-Achse auf, so dass sich insgesamt 3 x 3 = 9 mögliche translatorische Fehler ergeben.

Fig. 4 veranschaulicht drei mögliche rotatorische Fehler bei Bewegungen des Messkopfes 30 in Richtung der X-Achse. Dabei bezeichnet der Fehler xRx Rotationen um die X-Achse bei Bewegung in Richtung der X-Achse und damit ein sogenanntes Rollen des Messkopfes 30. Eine Rotation um die Y-Achse bei Bewegung in Richtung der X-Achse wird als Nicken bezeichnet und eine Rotation um die Z-Achse bei Bewegung in Richtung der X-Achse wird als Gieren bezeichnet.

Fig. 4 stellt damit die drei möglichen rotatorischen Fehler bei Bewegungen in Richtung der X-Achse dar. Analog kann ein Rollen, ein Nicken und/oder ein Gieren auch bei Bewegungen in Richtung der Y-Achse sowie bei Bewegungen in Richtung der Z-Achse auftreten, so dass sich auch bei der Rotation 3 x 3 = 9 mögliche Fehler ergeben.

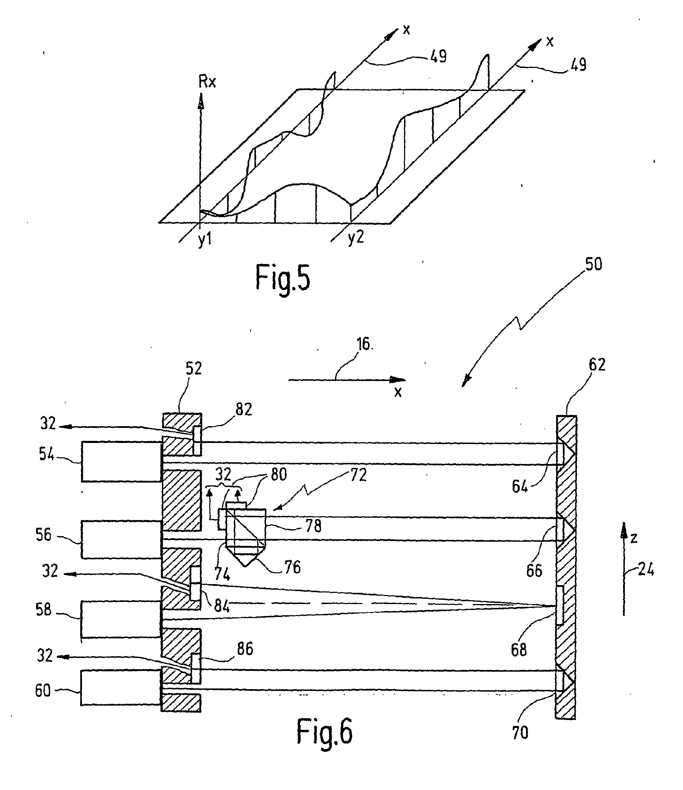

Fig. 5 veranschaulicht mögliche Verläufe von Rotationen um die X-Achse (Rx) bei verschiedenen Bewegungen des Messkopfes 30. Dabei entsprechen die Kurven über den parallelen Messlinien 49 xRx- Fehlern und die Kurve über der Geraden, die die Punkte y1 und y2 verbindet, entspricht einem yRx-Fehler. Tendenziell zeigt sich hier, dass der Rx-Fehler mit wachsendem y (y2 > y1) größer wird. Dies ist ein typischer Effekt, wie er bei einem Horizontalarm-Messgerät 10 bei einer Addition geometrischer und elastisch-bedingter Fehler zu erwarten ist (Diese Fehler können aber auch unterschiedliches Vorzeichen aufweisen und sich dann subtrahieren). Je weiter der Horizontalarm 20 ausgefahren ist, desto größer ist das resultierende Drehmoment um die X-Achse, was durch eine elastische Deformation des Ständers 14 und des Horizontalarms 20 aufgefangen wird. Die elastischen Deformationen haben den in der Fig. 5 von links nach rechts ansteigenden Trend der Rx-Werte zur Folge. Die kurzwelligen Minima und Maxima, die den in der Fig. 5 dargestellten Verläufen aufgeprägt sind, kommen typischerweise durch geometrische Führungsfehler der X- und der Y-Führungen zustande.

Fig. 6 zeigt eine Laser-Messvorrichtung 50, mit der die in der Fig. 5 dargestellten Verläufe aufgenommen werden können. Die Ziffer 52 bezeichnet eine Basis, die vier Laser 54, 56, 58 und 60, beispielsweise Laserdioden mit einer Fokussierung, trägt. Die Basis 52 wird beispielsweise definiert mit der Bezugsebene 12 des Horizontalarm-Messgeräts 10 verbunden. Eine Reflektoranordung 62 mit Reflektoren 64, 66, 68 und 70 wird mit dem Messkopf 30 verbunden. Das von den Lasern 54, 56, 58 und 60 emittierte Licht wird von den Reflektoren 64, 66, 68 und 70 reflektiert und von Photodetektoren 80, 82, 84 und 86 registriert. Der Messkopf 30 mit der Reflektoranordnung 62 wird in Richtung der Laserstrahlen bewegt. Dabei auftretende Rotationen und translatorische Verschiebungen führen zu Änderungen der von den Photodetektoren 80, 82, 84 und 86 registrierten Intensität der reflektierten Laserstrahlen. Aus diesen Intensitätsänderungen lassen sich die in der Fig. 5 dargestellten Verläufe erzeugen.

So lassen sich beispielsweise mit Hilfe des Interferometers 72 Positionsfehler in Bewegungsrichtung des Messkopfes und damit der Reflektoranordnung 62 feststellen. Der vom Laser 56 emittierte Lichtstrahl wird an der Grenzfläche zwischen den Prismen 74 und 78 in einen Messstrahl und einen Referenzstrahl aufgeteilt. Der Referenzstrahl wird mit Hilfe des Prismas 76 und der Grenzfläche zwischen den Prismen 74 und 78 auf Photodetektoren 80 gelenkt. Der Referenzstrahl besitzt damit eine definierte Länge. Der Messstrahl verlässt das Prisma 78 und wird von dem Reflektor 66, beispielsweise einer verspiegelten Würfelecke, reflektiert. Die Prismen 74 und 78 lenken den reflektierten Strahl so auf die Photodetektoren 80, dass sich Referenzstrahl und reflektierter Strahl überlagern. Der reflektierte Strahl oder Messstrahl hat eine variable Länge, die vom Abstand der Reflektoranordnung 62 von der Basis 52 abhängig ist. Je nach Wegunterschied zwischen Referenzstrahl und Messstrahl ergibt sich nach der Vereinigung der Strahlen durch Interferenz eine Verstärkung oder eine Auslöschung. Beim Bewegen der Reflektoranordnung 62 ergibt sich im Abstand halber Wellenlängen eine Folge von Helligkeitsmaxima und -minima. Durch Zählen der Maxima ergibt sich beispielsweise ein Längenmaß mit der Feinheit einer halben Wellenlänge. Bei einer Wellenlänge von beispielsweise 600 nm ergibt sich also eine Genauigkeit in der Größenordnung von Zehnteln eines Mikrometers. Beim Bewegen des Messkopfes in Richtung der X-Achse lassen sich damit Positionsfehler in dieser Richtung (xTx) mit dieser Genauigkeit feststellen.

Das von dem Laser 58 ausgehende Licht wird von einem ebenen Spiegel 68 auf den Photodetektor 84 reflektiert.

Damit bilden sich Gier- und Nick-Bewegungen der Reflektoranordnung 62 direkt in der Intensitätsverteilung auf dem Photodetektor 84 ab. Eine Auswertung dieser Intensitätsverteilung erlaubt daher eine Bestimmung von rotatorischen Nick- und Gier-Fehlern.

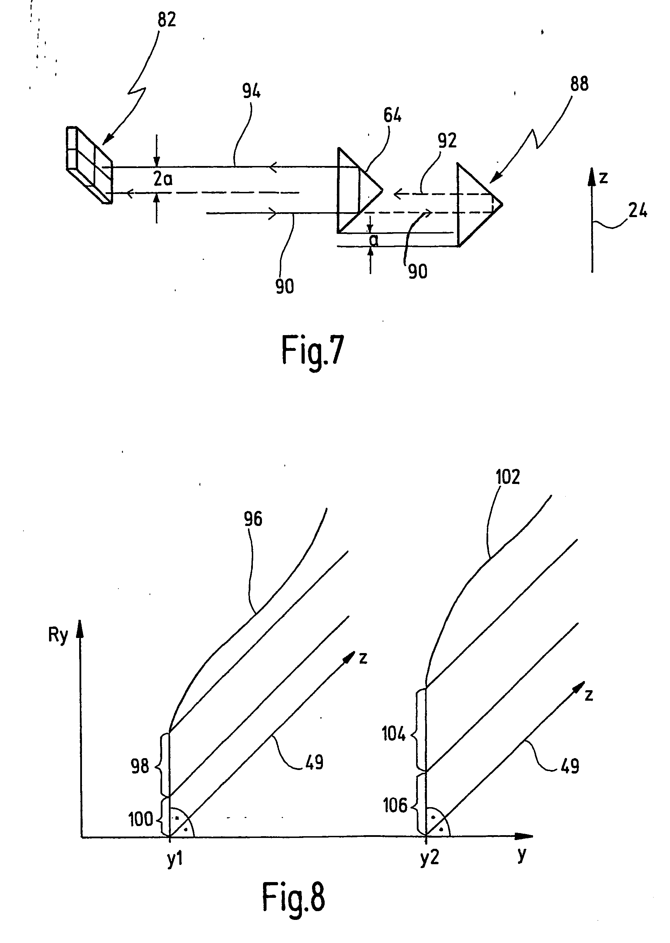

Rollbewegungen lassen sich durch Auswertung der Signale der Photodetektoren 82 und 86 ermitteln. Mit einem einzelnen Photodetektor 82 oder 86 lassen sich zunächst Querverschiebungen der Reflektoranordnung 62 feststellen. Dies wird durch die Fig. 7 veranschaulicht. Der Reflektor 64 kann beispielsweise als verspiegelte Würfelecke realisiert sein und hat die Eigenschaft, einfallendes Licht parallel zur Einfallrichtung zurückzureflektieren. In der mit 64 bezeichneten Stellung reflektiert der Reflektor 64 beispielsweise den einfallenden Strahl 90 als reflektierten Strahl 94 auf den Photodetektor 82. Die Ziffer 88 bezeichnet den Reflektor 64 in einer um den Betrag a entgegen der Z-Richtung quer zum einfallenden Laserstrahl vers'chobenen Position. In diesem Fall wird das auf den Reflektor 64 einfallende Licht als Lichtstrahl 92 reflektiert. Wie aus der Zeichnung ersichtlich ist, fällt der Lichtstrahl 92 im Abstand 2 * a vom Lichtstrahl 94 auf den Photodetektor 82. Durch Auswertung der Intensitätsverteilung auf dem Photodetektor 82 lassen sich damit Querverschiebungen a detektieren. In der Darstellung der Fig. 6 entspricht das gleichzeitige Auftreten einer Querbewegung des Reflektors 64 aus der Zeichenebene heraus und einer Querbewegung des Reflektors 70 in die Zeichenebene hinein (oder umgekehrt) einer Rollbewegung um die X-Achse. Damit kann auch eine Rollbewegung mit der gezeigten Laseranordnung detektiert und quantitativ erfasst werden.

Zur Detektion der verschiedenen translatorischen und rotatorischen Fehler können die Signale der Photodetektoren 80, 82, 84 und 86 beispielsweise der Auswertevorrichtung 32 zugeführt werden. Fig. 8 zeigt Rotationsfehler Ry, wie sie mit der vorstehend beschriebenen Laser-Messvorrichtung 50 erfasst werden können. Dabei bezeichnen die Ziffern 49 in Z-Raumrichtung verlaufende Messlinien, die an einer ersten Y-Position y1 und an einer zweiten Y-Position y2 gemessen wurden. Die Ziffern 96 und 102 bezeichnen die zugehörigen zRy-Verläufe. Der Fehler zRy1 (Ziffer 96) enthält zwei konstante Anteile 98, 100 und einen variablen Rest.

Der konstante Fehleranteil 98 kann beispielsweise aus einem geometrischen Führungsfehler der Y-Führung an der Stelle y1 resultieren. Bei der dargestellten Bewegung längs der Z-Achse mit konstantem y1 bleibt dieser geometrische Fehleranteil dann konstant.

Der konstante Fehleranteil 100 kann einem Messfehler (Offset) entsprechen, der durch die Justage der Laserbasis 52 oder der Reflektoranordnung 62 verursacht wird und beim Bewegen des Messkopfes 30 mit dem Reflektor 64 längs der Z-Raumrichtung konstant bleibt.

Ganz analog weist die Kurve 102, also der Verlauf des Fehlers zRy an der Stelle y2 einen konstanten Fehleranteil 104 als geometrischen Führungsfehler der Y-Führung und einen konstanten Messfehler 106 (Offset) auf.

Da die Laser-Messvorrichtung 50 jeweils für die Aufnahme der Fehlerkurven 96 und 102 neu montiert und justiert wurde, sind die aus diesen Montagen resultierenden Offset-Fehler 100 und 106 im allgemeinen nicht gleich. Dies gilt analog für die Fehler 98 und 104 der Y-Führung, die an verschiedenen Stellen y1, y2 im allgemeinen verschieden sind. Aufgrund der verschieden großen Konstantfehleranteile sind die Absolutwerte der zRy-Fehlerkurven 96 und 102 nicht direkt vergleichbar. Dies ist insbesondere dann problematisch, wenn zwischen den Linien interpoliert werden soll. Für eine korrekte Interpolation müßten die Fehlerkurven 96 und 102 den gleichen Absolutbezug haben. Aus den dargestellten Gründen ist dies bei einfacher Messung von mehreren Einzellinien nicht automatisch gegeben.

Erfindungsgemäß werden die Verläufe von Rotationsfehlern (hier zRy1, zRy2) an definierten Stellen auf einen vorbestimmten Wert gesetzt. Solche Stellen werden beispielsweise durch Schnittpunkte der Messlinie 49 der ersten Raumrichtung mit einer Messlinie einer zweiten Raumrichtung definiert. In der Darstellung der Fig. 8 könnte die Verbindung der Punkte y1 und y2 eine Messlinie einer zweiten Raumrichtung bilden. In diesem Fall werden die Fehlerkurven 96 und 102 jeweils additiv soweit verschoben, bis sie in ihrem jeweiligen Schnittpunkt mit der Verbindung der Punkte y1 und y2 den Wert Null annehmen. Damit wird ein gemeinsamer Bezug zwischen den Rotationen zRy1, zRy2, und ggf. yRy hergestellt. Die nach dem Verschieben verbleibenden Restfehler über den Messlinien 49 geben die relativen Änderungen der Fehler, respektive Korrekturen bei Bewegungen längs der Z-Raumrichtung an.

Damit ist das Problem des anfangs fehlenden Bezuges zwischen den Rotations-Fehlerkurven beseitigt. Weitere Probleme ergeben sich daraus, dass die Richtung der Messlinien, die durch die Laserstrahlrichtung definiert wird, von der Soll-Richtung abweicht. Dies spielt insbesondere bei der Erfassung von Translationsfehlern eine Rolle. '

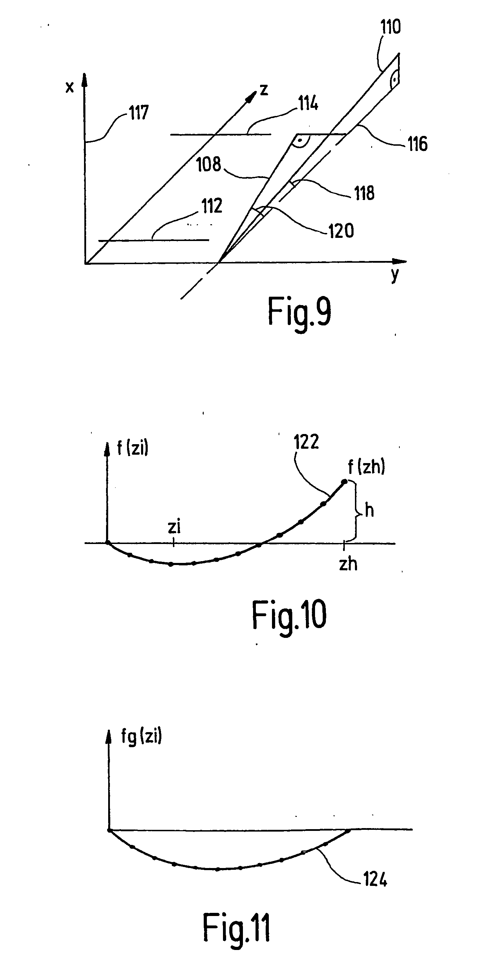

Derartige Richtungsabweichungen oder Winkelfehler beim Aufnehmen von Messwerten werden durch die Fig. 9 veranschaulicht. Fig. 9 zeigt eine ZY-Ebene mit einer senkrechten Linie 117. Die Ziffer 116 bezeichnet die Soll-Richtung und damit die ideale Lage von Messlinien. Die Ziffer 108 bezeichnet eine Messlinie einer ersten Raumrichtung, die zwar in der YZ-Ebene liegt, in dieser Ebene aber um eine Winkelabweichung 120 von der Soll-Richtung 116 abweicht. Entsprechend bezeichnet die Ziffer 110 eine Messlinie einer ersten Raumrichtung, die um eine Winkelabweichung 118 von der Soll-Richtung 116 abweicht, wobei diese Abweichung so gerichtet ist, dass sie aus der YZ-Ebene herausführt. Die Ziffer 112 bezeichnet eine erste Messlinie einer zweiten Raumrichtung und die Ziffer 114 bezeichnet eine dazu parallele zweite Messlinie der zweiten Raumrichtung. Die erste Messlinie 112 dient zur Definition von Schnittpunkten für das Herstellen der Bezüge zwischen verschiedenen Fehlerkurven, wie es im Zusammenhang mit der Fig. 8 erläutert wurde. Die zweite Messlinie 114 repräsentiert gewissermaßen eine Hilfsquerlinie, mit deren Hilfe sich die Auswirkungen der dargestellten Winkelfehler kompensieren lassen. Dies wird im folgenden erläutert.

Fig. 10 zeigt einen typischen Verlauf einer Kurve von Korrekturwerten, die mit einem Winkelfehler einer Messlinie aufgenommen wurden. Linksseitig ist die Kurve in den Nullpunkt verschoben worden, wie es im Zusammenhang mit der Fig. 8 erläutert worden ist. Der nach rechts ansteigende Verlauf ergibt sich durch einen der Winkelfehler 118 oder 120. Die in der Fig. 9 dargestellten Richtungsfehler rufen beim Messvorgang scheinbare Querabweichungen hervor, die in der Realität nicht vorhanden sind und daher die Messergebnisse unerwünschterweise verfälschen. Mit zunehmendem Abstand wachsen diese scheinbaren Querabweichungen an, so dass sich der in Fig. 10 dargestellte fehlerhafte Verlauf der Kurve 122 ergeben kann. Dabei ist die Kurve 122 dadurch definiert, dass sie verschiedene gemessene Fehler oder dazu korrespondierende Korrekturwerte verbindet. Erfindungsgemäß wird dieser Fehler dadurch kompensiert, dass die Kurve 122 um ihren linken Ursprung herum rechnerisch soweit manipuliert wird, bis ihr rechtes Ende einen vorbestimmten Wert, vorzugsweise den Wert Null, erreicht. Dabei fällt das rechte Ende mit dem Schnittpunkt der Messlinie 116 und der Hilfsquerlinie 114 zusammen. Die Hilfsquerlinie 114, die vorstehend auch als zweite Messlinie zweiter Raumrichtung bezeichnet wurde, dient damit dazu, Winkelfehler 118, 120 zu kompensieren. Die Kurve 124 in der Fig. 11 zeigt das Resultat der erfindungsgemäßen Manipulation der Kurve 122.

Vorstehend wurde beschrieben, wie ein gemeinsamer Bezug für einzeln aufgenommene Rotations-Fehlerkurven hergestellt werden kann und wie Richtungsfehler bei Translations-Fehlerkurven beseitigt werden können. Die nach den beschriebenen Aufbereitungen der erfassten Werte übriggebliebenen Fehlerwerte enthalten noch elastisch bedingte und geometrisch bedingte Fehleranteile. Im folgenden wird eine weitere Ausgestaltung der Erfindung erläutert, die eine weitgehende, wenn auch nicht vollkommene Trennung elastisch bedingter Führungsfehler und geometrisch bedingter Führungsfehler erlaubt.

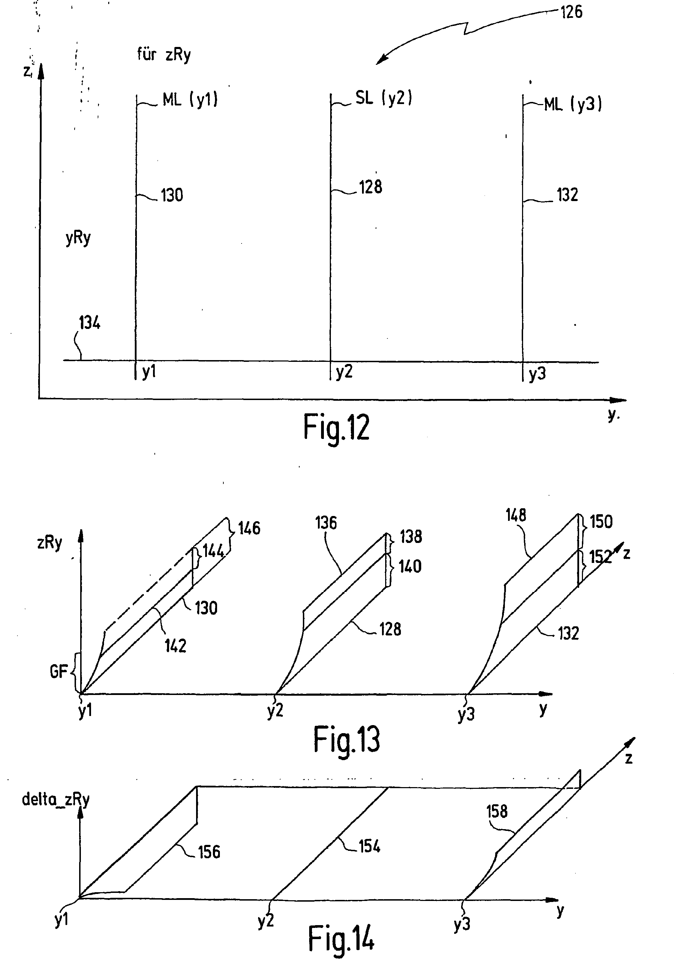

Fig. 12 zeigt einen Mehrfachfächer 126 von Messlinien 128, 130 und 132, die sich in der Y-, Z-Ebene längs der Z-Richtung als erster Raumrichtung erstrecken. Über diesen Messlinien werden Rotationen um die Y-Achse bei Bewegung in Z-Richtung aufgetragen, also die zRy-Fehler oder aber die Korrekturwerte zur Kompensation eben dieser Fehler. Die Messlinien 128, 130 und 132 werden von einer ersten Messlinie 134 einer zweiten Raumrichtung (hier y) geschnitten. Mit dieser Messlinienanordnung lassen sich elastisch bedingte Veränderungen von Rotationsfehlern bezüglich der Y-Achse bei Bewegungen in Richtung der Z-Achse erfassen.

Zur Veranschaulichung solcher Einflüsse betrachte man zunächst das Horizontalarm-Messgerät 10 aus der Fig. 1. Beim Ausfahren des Horizontalarm 20 treten natürlicherweise elastische Durchbiegungen auf, die von der Ausfahrlänge, also im Bild der Fig. 12 von den Werten y1, y2 und y3 abhängig sind. Diesen elastischen Durchbiegungen überlagert sich ein geometrischer Führungsfehler, der längs der Y-Führung als Rotation auftritt. Die Überlagerung der geometrisch bedingten Rotation des Horizontalarms 20 mit seiner elastischen Durchbiegung entspricht physikalisch einer Rotation eines gebogenen Balkens. Bei der Rotation eines gebogenen Balkens wird das tiefstliegende Ende des gebogenen Balkens aus seiner tiefsten Position herausgedreht. Dieses Herausdrehen aus der tiefsten Position ruft, als Folge der Schwerkraft, zwangsläufig ein Rückstellmoment hervor, das zu einer elastischen Torsion des Balkens führt.

Diese elastische Torsion überlagert sich der geometrisch bedingten Rotation. Letztlich wird das Ergebnis der Überlagerung gemessen. Je nach Ausfahrlänge (y1, y2, y3) treten unterschiedliche Durchbiegungen und damit unterschiedliche Rückstellmomente und damit unterschiedliche Torsionen auf. Daraus ergeben sich die je nach Y-Position (y1, y2, y3) unterschiedlich starken elastisch bedingten Einflüsse auf Rotationen um die Y-Achse bei Bewegungen längs der Z-Achse.

Ähnliche Effekte treten auch in anderen Raumrichtungen auf, zum Beispiel kann in X-Richtung ein zRx-Führungsfehler auftreten. Die in Fig. 12 dargestellte Messlinienanordnung ist daher nur als Beispiel zu werten.

Längs der Messlinien 128, 130, 132 werden in der vorstehend beschriebenen Weise Fehlerverläufe zRy1, zRy2, zRy3 oder auf diese Fehler bezogene Korrekturwerte aufgenommen. Weiter wird zwischen diesen zRy-Kurven und der yRy-Kurve über der Messlinie 134 zweiter Raumrichtung der Bezug hergestellt, indem die zRy-Kurven additiv verschoben werden, wie es in Verbindung mit Fig. 8 beschrieben wurde. Gegebenenfalls erfolgt noch eine Winkelkorrektur durch Manipulation der Kurven, wie es in Verbindung mit den Figuren 9 bis 11 beschrieben wurde. Diese Manipulation oder Winkelkorrektur ist bei Translationen von Bedeutung und kann bei der Betrachtung von Rotationen gegebenenfalls weggelassen werden. Die nach diesen Korrekturen verbleibenden zRy-Werte haben qualitativ die in Fig. 13 Zusammensetzung. Dabei sind die zRy-Verläufe aus Gründen der Übersichtlichkeit als im wesentlichen konstant dargestellt.

Der zRy-Verlauf 136 über der Messlinie 128 weist beispielsweise einen geometrisch bedingten Anteil 140 und einen elastisch bedingten Anteil 138 auf. Analog weist der zRy-Verlauf 142 über der Messlinie 130 einen geometrischen Anteil 146 und einen elastisch bedingten Anteil 144 mit negativem Vorzeichen auf. In gleicher Weise weist der zRy-Verlauf 148 über der Messlinie 132 einen elastisch bedingten Anteil 150 und einen geometrisch bedingten Anteil 152 auf.

Mit Blick auf die geometrisch bedingten Anteile ist hier wesentlich, dass unterschiedliche geometrisch bedingte Fehler, die aus verschiedenen Y-Positionen resultierten, bereits bei dem Verschieben der zRy-Kurven gemäß Fig. 8 subtrahiert wurden. Die jetzt in Fig. 13 noch übrigen geometrisch bedingten Fehleranteile resultieren daher aus geometrischen Einflüssen der Führung in Z-Richtung.

Diese Einflüsse sind für die drei Messlinien 128, 130 und 132 gleich. Daraus ergibt sich als wesentliche Schlußfolgerung, dass die verbleibenden geometrischen Einflüsse durch eine weitere Differenzbildung eliminiert werden können.

Erfindungsgemäß wird eine der Messlinien 128, 130, 132 des Mehrfachfächers 126 als Bezugslinie gewählt. Dies ist typischerweise, aber nicht zwangsläufig, die in Messbereichsmitte liegende Standardlinie 128 (SL(y2)). Durch die mittige Lage werden Ungenauigkeiten, die mit dem Abstand zunehmen, minimiert. Die zRy-Werte dieser Standardlinie 128 werden von den korrespondierenden zRy-Werten der übrigen parallelen Messlinien 130 und 132 subtrahiert. Im Ergebnis, das in Fig. 14 dargestellt ist, liegen damit zRy-Werte vor, die keinerlei geometrische Anteile mehr enthalten.

Physikalisch entsprechen diese übriggebliebenen Werte den Änderungen der elastischen Einflüsse beim Übergang von der Standardlinie 128 auf eine parallel dazu liegende Linie. Auf diese Weise wird erfindungsgemäß eine weitgehende, wenn auch nicht vollkommene Trennung von elastisch bedingten Fehlern und geometrisch bedingten Fehlern erreicht. Die Trennung ist insofern weitgehend, als die übriggebliebenen zRy-Werte über den Messlinien 130 und 132 keinerlei geometrisch bedingte Anteile mehr enthalten. Andererseits ist die Trennung nicht vollkommen, weil die zRy-Werte der Kurve 136 über der Standardmesslinie 128 noch geometrisch bedingte Anteile 140 und elastisch bedingte Anteile 138 aufweisen.

Die erfindungsgemäß erreichte weitgehende Trennung der elastisch bedingten Einflüsse von den geometrisch bedingten Einflüssen ist von großem Vorteil. So sind beispielsweise die übriggebliebenen elastisch bedingten Einflüsse, die elastisch bedingte Änderungen gegenüber den Werten der Standardlinie repräsentieren, für Koordinatenmessgeräte eines bestimmten Typs weitgehend konstant. Sie werden insbesondere nicht von Geräte-individuellen geometrischen Führungsfehlern beeinflußt. Diese geometrisch bedingten Geräte-individuellen Führungsfehler lassen sich durch eine Vermessung weniger Standardlinien bei jedem Gerät erfassen. Die zusätzlichen elastisch bedingten Änderungen lassen sich dagegen bei einem individuellen Koordinatenmessgerät stellvertretend für die ganze Baureihe dieser Koordinatenmessgeräte aufnehmen. Diese Werte können dann einfach zusätzlich zu den Geräte-individuell aufgenommenen Standardlinien in einem Geräte-individuellen Korrekturwertspeicher abgelegt werden.

Auf diese Weise erlaubt die Erfindung eine Korrektur auch elastisch bedingter Führungsfehler mit einem geringen Aufwand, der, wenn man ein Einzelgerät betrachtet, nicht über den bisher bereits betriebenen Aufwand für die Aufnahme der Standardlinien hinausgeht.

Fig. 15 zeigt ein Interpolationsverfahren zum Bestimmen und/ oder Korrigieren der Führungsfehler beliebiger Punkte P in dem Messvolumen eines Koordinatenmessgerätes. Dabei entspricht die Messlinie ML(zTy2) beispielsweise einer Standardlinie, für deren Punkte B und D zugehörige Korrekturwerte F(B) und F(D) als erste Korrekturwerte in dem Korrekturwertspeicher abgelegt sind. Die Messlinie ML(zTy1) entspricht einer zur Standardlinie parallelen Messlinie wie sie bei einem individuellen Koordinatenmessgerät stellvertretend für die zugehörige Baureihe der Koordinatenmessgeräte vermessen wurde. Entsprechend enthält der Korrekturwertspeicher 40 für die Punkte A und C dieser Linie die Änderungen der elastisch bedingten Fehler/Korrekturen gegenüber den Werten der Punkte B und D der Standardlinie. Aus den Werten F(T), F(B) und den Änderungen für die Punkte C und A lassen sich dann die Korrekturwerte/Fehler F(A) und F(C) bestimmen. Aus den vier Werten F(A), F(B), F(C), F(D) läßt sich dann der Fehler/Korrekturwert eines beliebigen Punktes P durch die in Fig. 15 dargestellte Interpolation bestimmen. Nach dieser selbsterklärenden Darstellung besitzt der Fehler F(P) im Punkt P beispielsweise den mit der Fläche (1-dy) * (1-dz) gewichteten Wert des Fehlers/ Korrekturwertes des Punktes A sowie den mit (1-dz) * dy gewichteten Fehler/Korrekturwert des Punktes B, den mit dz * (1-dy) gewichteten Fehler/Korrekturwert an der Stelle C sowie den mit dz * dy gewichteten Fehler/Korrekturwert an der Stelle D.

Im Zusammenhang mit den Figuren 9 bis 11 wurde erläutert, wie ein Richtungsbezug zwischen verschiedenen Messlinien hergestellt werden kann. Alternativ zu dem in Verbindung mit Fig. 9 bis Fig. 11 beschriebenen Verfahren ist es bei Z-Translationen auch möglich, die Z-Translationen parallel zur Schwerkraftrichtung durch eine hochgenaue elektronische Neigungswaage in gleicher horizontaler Lage auszurichten und damit den Richtungsbezug herzustellen. Da die Messlinien immer bezüglich der Koordinatenmessgerät-Bezugsebene aufgenommen werden müssen, die beim Verfahren des Koordinatenmessgerätes auch verkippen kann, ist es hierzu besonders vorteilhaft, die Z-Translationen auf die Differenz von zwei elektronischen Neigungswaagen auszurichten, wobei zum Beispiel eine Neigungswaage direkt auf der Bezugsebene des Koordinatenmessgeräts und die andere an der Laser-Messvorrichtung für die Tz-Messung angebracht ist.

Außerdem lassen sich Translationen durch Messen geeigneter Punkte an einer großen kalibrierten Platte ausrichten. Die Messung und Auswertung erfolgt dabei in Richtung der Translationen. Bei X-Translationen kann z.B. eine in X-Richtung kalibrierte Bezugsebene des Koordinatenmessgerätes zur Herstellung der Richtungsbezüge verwendet werden. Eine solche kalibrierte Z,Y-Ebene mit in X-Richtung kalibrierten Messpunkten 160 ist in der Fig. 16 dargestellt. Die Richtungsbezüge aller Translationen lassen sich auch durch Vermessen einer Kugelplatte mit in allen Richtungen kalibrierten Kugeln, herstellen.

Besonders vorteilhaft ist auch eine große Platte mit fest aufgespannten und ausgerichteten Geradheitsnormalen 162, wie sie in der Fig. 17 dargestellt sind. An diesen Geradheitsnormalen lassen sich alle nötigen Tranlationen (z.B.

zTx und zTy bei Z-Mehrfachlinien) direkt und mit Richtungsbezug durch einfaches Scannen der Geradheitsnormale bestimmen.

**Patentansprüche**

1. Verfahren zur Bestimmung und Korrektur von Führungsfehlern bei einem Koordinatenmessgerät (10) mit einem beweglichen Messkopf (30) und mit Mitteln (14, 20) zur beweglichen Führung des Messkopfes (30) in wenigstens zwei verschiedenen Raumrichtungen (16, 22, 24) und mit Skalen (18, 26, 28) und Messlinien (49; 108, 110, 112, 114; 128, 130, 132, 134), die den Raumrichtungen (16, 22, 24) zugeordnet sind, wobei sich die Messlinien verschiedener Raumrichtungen (16, 22, 24) schneiden und wobei zu vorbestimmten Werten der Skalen (18, 26, 28) längs der Messlinien (49; 108, 110, 112, 114; 128, 130, 132, 134) Korrekturwerte ermittelt werden, um Fehler der Skalen (18, 26, 28) und oder der Mittel (14, 20) zur beweglichen Führung des Messkopfes (30) zu korrigieren, **dadurch gekennzeichnet, dass** die längs einer Messlinie (49; 108, 110; 128, 130, 132) einer ersten Raumrichtung ermittelten Korrekturwerte so verändert werden, dass der veränderte Korrekturwert dieser Messlinie (49; 108, 110; 128, 130, 132) im Schnittpunkt mit einer ersten Messlinie (112; 134) einer zweiten Raumrichtung einen vorbestimmten Wert annimmt.

2. Verfahren nach Anspruch 1, **dadurch gekennzeichnet, dass** die Korrekturwerte durch Verknüpfen mit einem additiven Offset verschoben werden.

3. Verfahren nach Anspruch 1 oder 2, **dadurch gekennzeichnet, dass** der vorbestimmte Wert gleich Null ist.

4. Verfahren nach einem der Ansprüche 1 bis 3, **dadurch gekennzeichnet, dass** der ersten Raumrichtung mehrere Messlinien (49; 128, 130, 132) zugeordnet sind, die längs dieser Raumrichtung verlaufen.

5. Verfahren nach einem der Ansprüche 1 bis 4, **gekennzeichnet durch** eine weitere Änderung der Korrekturwerte in Abhängigkeit von einer zweiten Messlinie (114) der zweiten Raumrichtung.

6. Verfahren nach Anspruch 5, **dadurch gekennzeichnet, dass** eine Kurve (122), die die Korrekturwerte einer der in der ersten Raumrichtung verlaufenden Messlinien (49; 108, 110; 128, 130, 132) verbindet, so manipuliert wird, dass der Korrekturwert dieser Messlinie (49; 108, 110; 128, 130, 132) im Schnittpunkt mit der zweiten Messlinie (114) der zweiten Raumrichtung nach der Manipulation einen vorbestimmten Wert annimmt.

7. Verfahren nach Anspruch 6, **dadurch gekennzeichnet, dass** der vorbestimmte Wert gleich Null ist.

8. Verfahren nach Anspruch 6 oder 7, **dadurch gekennzeichnet, dass** die Kurve (122) um den Punkt manipuliert wird, der durch den vorbestimmten Wert des geänderten Korrekturwertes dieser Messlinie (49; 108, 110; 128, 130, 132) im Schnittpunkt mit der ersten Messlinie (112) der zweiten Raumrichtung gebildet wird.

9. Verfahren nach Anspruch 8, **dadurch gekennzeichnet, dass** die manipulierte Kurve (124) durch die Gleichung

$$\texttt{fg(xi) = f(xi) - (h/xh) * xi}$$

erhalten wird, wobei f(xi) eine Folge von Korrekturwerten über Punkten xi einer Messlinie darstellt und h den Abstand des Korrekturwertes f(xh) vom Wert Null im Schnittpunkt mit der zweiten Korrekturlinie angibt und wobei die Kurve 122 f(xi) um den Nullpunkt herum manipuliert wird.

10. Verfahren nach einem der vorhergehenden Ansprüche, **dadurch gekennzeichnet, dass** die Messlinien (49; 108, 110; 128, 130, 132) der ersten Raumrichtung zusätzlich einer Rechtwinkligkeitsmessung in Bezug auf die Normale der Ebene, die durch mehrere Messlinien (49; 108, 110; 128, 130, 132) der ersten Raumrichtung definiert ist, unterzogen werden und dass eine Abweichung (118, 120) der Rechtwinkligkeit jeweils einer einzelnen Messlinie (108, 110) von einem gemeinsamen Bezugswert gebildet wird und dass eine Manipulation der Kurven der Korrekturwerte der einzelnen Messlinie erfolgt, wobei das Ausmaß der Manipulation von der genannten Abweichung (118, 120) bestimmt wird.

11. Verfahren nach Anspruch 10, **dadurch gekennzeichnet, dass** das Ausmaß der Manipulation proportional zu der genannten Abweichung ist.

12. Verfahren nach einem der Ansprüche 4 bis 11, **dadurch gekennzeichnet, dass** die Korrekturwerte einer vorbestimmten (128) der längs der ersten Raumrichtung verlaufenden Messlinien (49; 108, 110; 128, 130, 132) von den zugehörigen Korrekturwerten dieser Messlinien (49; 108, 110; 128, 130, 132) subtrahiert wird.

13. Verfahren nach Anspruch 12, **dadurch gekennzeichnet, dass** die Korrekturwerte der vorbestimmten längs der ersten Raumrichtung verlaufenden Messlinie (128) als erste Korrekturwerte in dem Korrekturwertspeicher (40) gespeichert werden.

14. Verfahren nach Anspruch 13, **dadurch gekennzeichnet, dass** die ersten Korrekturwerte für ein individuelles Koordinatenmessgerät (10) individuell ermittelt und gespeichert werden.

15. Verfahren nach einem der Ansprüche 12 bis 14, **dadurch gekennzeichnet, dass** die bei der Subtraktion erhaltenen Ergebnisse als zweite Korrekturwerte in dem Korrekturwertspeicher (40) gespeichert werden.

16. Verfahren nach Anspruch 15, **dadurch gekennzeichnet, dass** die zweiten Korrekturwerte bei einem individuellen Koordinatenmessgerät (10) eines bestimmten Typs ermittelt werden und in Korrekturwertspeichern (40) anderer Koordinatenmessgeräte (10) des gleichen Typs gespeichert werden.

17. Verfahren nach Anspruch 15 oder 16, **dadurch gekennzeichnet, dass** Führungsfehler von Koordinatenmessgeräten 10 auf der Grundlage der ersten und der zweiten Änderungen der elastischen Korrekturwerte korrigiert werden.

18. Verfahren nach Anspruch 17, **dadurch gekennzeichnet, dass** für Punkte, die nicht auf den Messlinien liegen, zugehörige Korrekturwerte durch Interpolation von Korrekturwerten von wenigstens zwei Messlinien (49; 108, 110; 128, 130, 132) ermittelt werden.

19. Verfahren nach Anspruch 18, **dadurch gekennzeichnet, dass** die Interpolation auf den je zwei nächstliegenden Korrekturwerten zweier Messlinien (49; 108, 110; 128, 130, 132) gleicher Raumrichtung basiert.

20. Verfahren nach einem der Ansprüche 18 oder 19, **dadurch gekennzeichnet, dass** die Interpolation auf einem Flächeninterpolationsverfahren oder einem räumlichen Interpolationsverfahren basiert.

21. Verfahren nach einem der vorhergehenden Ansprüche, **dadurch gekennzeichnet, dass** das Koordinatenmessgerät (10) ein Horizontalarm-Messgerät ist, das einen in X-Richtung (16) beweglichen Ständer (14) besitzt, der einen in Y-Richtung (22) und in Z-Richtung (24) beweglichen Horizontalarm (20) mit einem Messkopf (30) trägt.

22. Verfahren nach einem der Ansprüche 1 bis 20, **dadurch gekennzeichnet, dass** das Koordinatenmessgerät (10) ein Portalgerät ist, dessen Portal in Y-Richtung beweglich ist und einen in X-Richtung auf dem Portal beweglichen Wagen aufweist, der eine in Z-Richtung bewegliche Pinole mit einem Messkopf trägt.

23. Verfahren nach einem der Ansprüche 1 bis 20, **dadurch gekennzeichnet, dass** das Koordinatenmessgerät (10) ein Gerät in Auslegerbauweise oder ein Gerät mit einer beliebigen anderen kinematischen Kette ist.

24. Koordinatenmessgerät (10) mit einem beweglichen Messkopf (30) und mit Mitteln (14, 20) zur beweglichen Führung des Messkopfes (30) in wenigstens zwei verschiedenen Raumrichtungen (16, 22, 24) und mit Skalen (18, 26, 28) und Messlinien (49; 108, 110, 112, 114; 128, 130, 132, 134) die den Raumrichtungen (16, 22, 24) zugeordnet sind, wobei sich die Messlinien verschiedener Raumrichtungen (16, 22, 24) schneiden und mit einem Korrekturwertspeicher (40), in dem zu vorbestimmten Werten der Skalen (18, 26, 28) längs der Messlinien (49; 108, 110; 128, 130, 132, 134) ermittelte Korrekturwerte abgelegt sind, mit denen Fehler der Skalen (18, 26, 28) und/oder der Mittel (14, 20) zur beweglichen Führung des Messkopfes (30) korrigiert werden, **dadurch gekennzeichnet, dass** die längs einer Messlinie (49; 108, 110; 128, 130, 132) einer ersten Raumrichtung ermittelten Korrekturwerte so verändert sind, dass der veränderte Korrekturwert dieser Messlinie (49; 108, 110; 128, 130, 132) im Schnittpunkt mit einer ersten Messlinie (112; 134) einer zweiten Raumrichtung einen vorbestimmten Wert annimmt.

25. Vorrichtung zur Bestimmung und Korrektur von Führungsfehlern bei einem Koordinatenmessgerät (10), **gekennzeichnet durch** Mittel (32, 50) zur Durchführung wenigstens eines der Verfahren nach den Ansprüchen 1 bis 20.

**26.** Korrekturwertspeichermedium (40) mit gespeicherten Korrekturwerten für ein Koordinatenmessgerät (10) mit einem beweglichen Messkopf (30) und mit Mitteln (14, 20) zur beweglichen Führung des Messkopfes (30) in wenigstens zwei verschiedenen Raumrichtungen (16, 22, 24) und mit Skalen (18, 26, 28) und Messlinien (49; 108, 110, 112, 114; 128, 130, 132, 134) die den Raumrichtungen (16, 22, 24) zugeordnet sind, wobei sich die Messlinien verschiedener Raumrichtungen schneiden, wobei die in dem Korrekturwertspeichermedium (40) gespeicherten Korrekturwerte zu vorbestimmten werten der Skalen (18, 26, 28) längs der Messlinien (49; 108, 110; 128, 130, 132, 134) ermittelt wurden, und wobei mit den gespeicherten Korrekturwerten Fehler der Skalen (18, 26, 28) und/oder der Mittel (14, 20) zur beweglichen Führung des Messkopfes (30) korrigiert werden, **dadurch gekennzeichnet, dass** die Korrekturwerte nach dem Verfahren nach einem der Ansprüche 1 bis 23 bestimmt und als veränderte Korrekturwerte in dem Korrekturwertspeichermedium gespeichert sind.

## Claims

**1.** Method for determining and correcting guiding errors in a coordinate measuring machine (10) having a movable measuring head (30) and having means (14, 20) for movably guiding the measuring head (30) in at least two different spatial directions (16, 22, 24), and having scales (18, 26, 28) and measuring lines (49; 108, 110, 112, 114; 128, 130, 132, 134) which are assigned to the spatial directions (16, 22, 24), wherein the measuring lines of different spatial directions (16, 22, 24) intersect, and wherein correction values are determined along the measuring lines (49; 108, 110, 112; 128, 130, 132, 134) for predetermined values of the scales (18, 26, 28) in order to correct for errors of the scales (18, 26, 28) and/or of the means (14, 20) for movably guiding the measuring head (30), **characterized in that** the correction values which are determined along a measuring line (49; 108, 110; 128, 130, 132) of a first spatial direction are modified such that the modified correction value of this measuring line (49; 108, 110; 128, 130, 132) is changed to a predetermined value at the point of intersection with a first measuring line (112; 134) of a second spatial direction.

**2.** Method according to Claim 1, **characterized in that** the correction values are displaced by combination with an additive offset.

**3.** Method according to Claim 1 or 2, **characterized in that** the predetermined value is equal to zero.

**4.** Method according to one of Claims 1 to 3, **characterized in that** the first spatial direction is assigned a number of measuring lines (49; 128, 130, 132) which run along this spatial direction.

**5.** Method according to one of Claims 1 to 4, **characterized by** a further modification of the correction values as a function of a second measuring line (114) of the second spatial direction.

**6.** Method according to Claim 5, **characterized in that** a curve (122) which joins the correction values of one of the measuring lines (49; 108, 110; 128, 130, 132) running in the first spatial direction is manipulated such that after the manipulation the correction value of this measuring line (49; 108, 110; 128, 130, 132) assumes a predetermined value at the point of intersection with the second measuring line (114) of the second spatial direction.

**7.** Method according to Claim 6, **characterized in that** the predetermined value is equal to zero.

**8.** Method according to Claim 6 or 7, **characterized in that** the curve (122) is manipulated about the point which is formed by the predetermined value of the modified correction value of this measuring line (49; 108, 110; 128, 130, 132) at the point of intersection with the first measuring line (112) of the second spatial direction.

**9.** Method according to Claim 8, **characterized in that** the manipulated curve (124) is obtained from the equation

$$fg(xi) = f(xi) - (h/xh) * xi$$

with f(xi) representing a sequence of correction values over points xi of a measuring line, and h specifying the distance of the correction value f(xh) from the value zero at the point of intersection with the second correction line, wherein the curve (122) f(xi) is manipulated around the zero point.

10. Method according to any of the preceding claims, **characterized in that** the measuring lines (49; 108, 110; 128, 130, 132) of the first spatial direction are additionally subjected to a rectangularity measurement with reference to the normal to the plane which is defined by a number of measuring lines (49; 108, 110; 128, 130, 132) of the first spatial direction, and **in that** a deviation (118, 120) in the rectangularity of a single measuring line (108, 110) from a common reference value is formed, and **in that** the curves of the correction values of the single measuring line are manipulated, the extent of the manipulation being determined from the said deviation (118, 120).

11. Method according to Claim 10, **characterized in that** the extent of the manipulation is proportional to the said deviation.

12. Method according to any of Claims 4 to 11, **characterized in that** the correction values of a predetermined measuring line (128) of the measuring lines (49; 108, 110; 128, 130, 132) running along the first spatial direction are subtracted from the associated correction values of these measuring lines (49; 108, 110; 128, 130, 132).

13. Method according to Claim 12, **characterized in that** the correction values of the predetermined measuring line (128) running along the first spatial direction are stored as first correction values in the correction value memory (40).

14. Method according to Claim 13, **characterized in that** the first correction values are determined and stored individually for an individual coordinate measuring machine (10).

15. Method according to any of Claims 12 to 14, **characterized in that** the results obtained from the subtraction are stored as second correction values in the correction value memory (40).

16. Method according to Claim 15, **characterized in that** the second correction values are determined on an individual coordinate measuring machine (10) of a specific type and are stored in correction value memories (40) of other coordinate measuring machines (10) of the same type.

17. Method according to Claim 15 or 16, **characterized in that** guiding errors of coordinate measuring machines (10) are corrected on the basis of the first and the second changes in the elastic correction values.

18. Method according to Claim 17, **characterized in that** associated correction values are determined for points which do not lie on the measuring lines by interpolation of correction values from at least two measuring lines (49; 108, 110; 128, 130, 132).

19. Method according to Claim 18, **characterized in that** the interpolation is based on the two respective closest correction values of two measuring lines (49; 108, 110; 128, 130, 132) of the same spatial direction.

20. Method according to any of Claims 18 or 19, **characterized in that** the interpolation is based on a two-dimensional interpolation method or a three-dimensional interpolation method.

21. Method according to any of the preceding claims, **characterized in that** the coordinate measuring machine (10) is a horizontal arm measuring machine having a column (14) which is adapted to move in the X direction (11), the column supporting the horizontal arm (20) halving a measuring head (30), the horizontal arm being adapted to move in the Y direction (22) and in the Z direction (24).

22. Method according to any of Claims 1 to 20, **characterized in that** the coordinate measuring machine (10) is a gantry machine whose gantry can be moved in the Y direction and whose gantry has a carriage which can be moved on the gantry in the X direction, the, carriage supporting a center sleeve, movable in the Z direction, with a measuring head.

23. Method according to any of Claims 1 to 20, **characterized in that** the coordinate measuring machine (10) is a machine of cantilever design or a machine having any other desired kinematic chain.

24. Coordinate measuring machine (10) having a movable measuring head (30) and having means (14, 20) for movably guiding the measuring head (30) in at least two different spatial directions (16, 22, 24) and having scales (18, 26, 28) and measuring lines (49; 108, 110, 112, 114; 128, 130, 132, 134) which are assigned to the spatial directions (16, 22, 24), with the measuring lines of different spatial directions (16, 22, 24) intersecting, and having a correction value memory (40) in which correction values which are determined for predetermined values of the scales (18, 26, 28) along the measuring lines (49; 108, 110; 128, 130, 132, 134) are stored, with errors of the scales (18, 26, 28) and/or of the means (14, 20) for movably guiding the measuring head (30) being corrected by means of the correction values, **characterized in that** the correction values which are determined along measuring line (49; 108, 110; 128, 130, 132) of a first spatial direction are modified such that the modified correction value of this measuring line (49; 108, 110; 128, 130, 132) is changed to a predetermined value at the point of intersection with a first measuring line (112; 134) of a second spatial direction.

25. Apparatus for determining and correcting guiding errors in a coordinate measuring machine (10), **characterized by** means (32, 50) for carrying out at least one of the methods according to Claims 1 to 20.

26. Correction value storage medium (40) comprising stored correction values for a coordinate measuring machine (10) having a movable measuring head (30) and having means (14, 20) for movably guiding the measuring head (30) in at least two different spatial directions (16, 22, 24) and having scales (18, 26, 28) and measuring lines (49; 108, 110, 112, 114; 128, 130, 132, 134) which are assigned to the spatial directions (16, 22, 24), wherein the measuring lines of different spatial directions intersect, wherein the correction values stored in the correction value storage medium (40) were determined for predetermined values of the scales (18, 26, 28) along the measuring lines (49; 108, 110; 128, 130, 132, 134), and wherein errors of the scales (18, 26, 28) and/or the means (14, 20) for movably guiding the measuring head (30) are corrected by the stored correction values, **characterized in that** the correction values are determined by a method according to one of claims 1 to 23 and stored as modified correction values in the correction value storage medium.

## Revendications

1. Procédé de détermination et de correction d'erreurs de guidage d'un appareil (10) de mesure de coordonnées qui présente une tête mobile de mesure (30), des moyens (14, 20) de guidage du déplacement de la tête de mesure (30) dans au moins deux directions spatiales différentes (16, 22, 24), des échelles (18, 26, 28) et des lignes de mesure (49; 108, 110, 112, 114; 128, 130, 132, 134) qui sont associées aux directions spatiales (16, 22, 24), les lignes de mesure coupant différentes directions spatiales (16, 22, 24) et des valeurs de correction de valeurs prédéterminées des échelles (18, 26, 28) le long des lignes de mesure (49; 108, 110, 112, 114; 128, 130, 132, 134) étant déterminées pour corriger les erreurs des échelles (18, 26, 28) ou des moyens (14, 20) de guidage du déplacement de la tête de mesure (30),
caractérisé en ce que les valeurs de correction déterminées le long d'une ligne de mesure (49; 108, 110; 128, 130, 132) dans une première direction spatiale sont modifiées de telle sorte que la valeur modifiée de correction de cette ligne de mesure (49; 108, 110; 128, 130, 132) prenne une valeur prédéterminée au point de concours avec une première ligne de mesure (112; 134) d'une deuxième direction spatiale.

2. Procédé selon la revendication 1, **caractérisé en ce que** les valeurs de correction sont décalées en étant associées à un décalage additif.

3. Procédé selon l'une des revendications 1 ou 2, **caractérisé en ce que** la valeur prédéterminée est égale à zéro.

4. Procédé selon l'une des revendications 1 à 3, **caractérisé en ce que** plusieurs lignes de mesure (49; 128, 130, 132, 134) qui s'étendent le long de la première direction spatiale sont associées à cette direction spatiale.

5. Procédé selon l'une des revendications 1 à 4, **caractérisé par** une autre modification des valeurs de correction en fonction d'une deuxième ligne de mesure (114) dans la deuxième direction spatiale.

6. Procédé selon la revendication 5, **caractérisé en ce qu'**une courbe (122) qui relie les valeurs de correction de l'une des lignes de mesure (49; 108, 110; 128, 130, 132) qui s'étend dans la première direction spatiale est manipulée de telle sorte qu'après la manipulation, la valeur de correction de cette ligne de mesure (49; 108, 110; 128, 130, 132) prenne une valeur prédéterminée au point de concours avec la deuxième ligne de mesure (114) dans la deuxième direction spatiale.

7. Procédé selon la revendication 6, **caractérisé en ce que** la valeur prédéterminée est égale à zéro.

8. Procédé selon la revendication 6 ou 7, **caractérisé en ce que** la courbe (122) est manipulée autour du point qui est formé par la valeur prédéterminée de la valeur de correction modifiée de cette ligne de mesure (49; 108, 110;

128, 130, 132) au point de concours avec la première ligne de mesure (112) de la deuxième direction spatiale.

9. Procédé selon la revendication 8, **caractérisé en ce que** la courbe (124) manipulée est obtenue à partir de l'équation

$$fg(xi) = f(xi) - (h/xh) * xi$$

dans laquelle f(xi) représente une succession de valeurs de correction en des points xi d'une ligne de mesure et h la distance entre la valeur de correction f(xh) et la valeur nulle au point de concours avec la deuxième ligne de correction, la courbe 122 f(xi) étant manipulée autour du point zéro.

10. Procédé selon l'une des revendications précédentes, **caractérisé en ce que** les lignes de mesure (49; 108, 110; 128, 130, 132) de la première direction spatiale subissent de plus une mesure d'orthogonalité par rapport à la normale au plan qui est définie par plusieurs lignes de mesure (49; 108, 110; 128, 130, 132) de la première direction spatiale, **en ce qu'**un écart (118, 120) d'orthogonalité de chaque ligne de mesure (108, 110) par rapport à une valeur de référence commune est formé et **en ce qu'**une manipulation des courbes des valeurs de correction des différentes lignes de mesure est effectuée, l'amplitude de la manipulation étant déterminée par ledit écart (118, 120).

11. Procédé selon la revendication 10, **caractérisé en ce que** l'ampleur de l'amplitude est proportionnelle audit écart.

12. Procédé selon l'une des revendications 4 à 11, **caractérisé en ce que** les valeurs de correction de la ligne de mesure (128) des lignes de mesure (49; 108, 110; 128, 130, 132) qui s'étendent le long de la première direction spatiale sont soustraites des valeurs de correction associées à ces lignes de mesure (49; 108, 110; 128, 130, 132).

13. Procédé selon la revendication 12, **caractérisé en ce que** les valeurs de correction de la ligne de mesure prédéterminée (128) qui s'étend dans la première direction spatiale sont conservées comme premières valeurs de correction dans la mémoire (40) de valeurs de correction.

14. Procédé selon la revendication 13, **caractérisé en ce que** les premières valeurs de correction sont déterminées séparément et conservées en mémoire pour chaque appareil (10) de mesure de coordonnées.

15. Procédé selon l'une des revendications 12 à 14, **caractérisé en ce que** les résultats obtenus lors de la soustraction sont conservés comme deuxièmes valeurs de correction dans la mémoire (40) de valeurs de correction.

16. Procédé selon la revendication 15, **caractérisé en ce que** les deuxièmes valeurs de correction d'un appareil (10) de mesure de coordonnées distinct d'un type défini sont déterminées et conservées dans la mémoire (40) de valeurs de correction d'autres appareils (10) de mesure de coordonnées du même type.

17. Procédé selon la revendication 15 ou 16, **caractérisé en ce que** les erreurs de guidage d'appareils (10) de mesure de coordonnées sont corrigées sur base des premières et des deuxièmes modifications des valeurs élastiques de correction.

18. Procédé selon la revendication 17, **caractérisé en ce que** pour des points qui ne sont pas situés sur des lignes de mesure, les valeurs de correction associées sont déterminées par interpolation de valeurs de correction d'au moins deux lignes de mesure (49; 108, 110; 128, 130, 132).

19. Procédé selon la revendication 18, **caractérisé en ce que** l'interpolation est basée sur les deux valeurs de correction les plus proches de deux lignes de mesure (49; 108, 110; 128, 130, 132) de la même direction spatiale.

20. Procédé selon l'une des revendications 18 ou 19, **caractérisé en ce que** l'interpolation est basée sur un procédé d'interpolation de surface ou sur un procédé d'interpolation dans l'espace.

21. Procédé selon l'une des revendications précédentes, **caractérisé en ce que** l'appareil (10) de mesure de coordonnées est un appareil de mesure à bras horizontal qui possède un socle (14) mobile dans la direction x (16), qui porte un bras horizontal (20) doté d'une tête de mesure (30) et qui peut être déplacé dans la direction y (22) et dans la direction z (24).

**22.** Procédé selon l'une des revendications 1 à 20, **caractérisé en ce que** l'appareil (10) de mesure de coordonnées est un appareil à portique dont le portique peut être déplacé dans la direction y et présente un chariot qui peut se déplacer sur le portique dans la direction x et qui porte un goujon doté d'une tête de mesure et mobile dans la direction z.

**23.** Procédé selon l'une des revendications 1 à 20, **caractérisé en ce que** l'appareil (10) de mesure de coordonnées est un appareil à structure en bras ou un appareil doté d'une autre chaîne cinématique quelconque.

**24.** Appareil (10) de mesure de coordonnées qui présente une tête mobile de mesure (30) et des moyens (14, 20) de guidage du déplacement de la tête de mesure (30) dans au moins deux directions spatiales différentes (16, 22, 24), et des échelles (18, 26, 28) et de lignes de mesure (49; 108, 110, 112, 114; 128, 130, 132, 134) qui sont associées aux directions spatiales (16, 22, 24), les lignes de mesure coupant différentes directions spatiales (16, 22, 24), et une mémoire (40) de valeurs de correction dans laquelle sont conservées les valeurs de correction de valeurs prédéterminées des échelles (18, 26, 28) déterminées le long des lignes de mesure (49; 108, 110; 128, 130, 132, 134) et par lesquelles des erreurs des échelles (18, 26, 28) et/ou des moyens (14, 20) de guidage de la tête mobile de mesure (30) sont corrigées,
**caractérisé en ce que** les valeurs de correction déterminées le long d'une ligne de mesure (49; 108, 110; 128, 130, 132) dans une première direction spatiale sont modifiées de telle sorte que la valeur modifiée de correction de cette ligne de mesure (49; 108, 110; 128, 130, 132) prenne une valeur prédéterminée au point de concours avec une première ligne de mesure (112; 134) d'une deuxième direction spatiale.

**25.** Dispositif de détermination de correction d'erreurs de guidage d'un appareil (10) de mesure de coordonnées, **caractérisé par** des moyens (32, 50) permettant d'exécuter au moins l'un des procédés selon les revendications 1 à 20.

**26.** Support (40) de mémoire de valeurs de correction dans lequel sont conservées des valeurs de correction d'un appareil (10) de mesure de coordonnées qui présente une tête mobile de mesure (30) et des moyens (14, 20) de guidage du déplacement de la tête de mesure (30) dans au moins deux directions spatiales différentes (16, 22, 24), des échelles (18, 26, 28) et des lignes de mesure (49; 108, 110, 112, 114; 128, 130, 132, 134) qui sont associées aux directions spatiales (16, 22, 24), les lignes de mesure se coupant dans différentes directions spatiales (16, 22, 24), les valeurs de correction de valeurs prédéterminées des échelles (18, 26, 28) le long des lignes de mesure (49; 108, 110; 128, 130, 132, 134), conservées dans le support de mémoire (40) de valeurs de correction ayant été déterminées, et les erreurs des échelles (18, 26, 28) et/ou des moyens (14, 20) de guidage du déplacement de la tête de mesure (30) ayant été corrigées par les valeurs de correction conservées en mémoire,
**caractérisé en ce que** les valeurs de correction sont déterminées par un procédé selon l'une des revendications 1 à 23 et sont conservées en mémoire dans le support de mémoire de valeurs de correction en tant que valeurs de correction modifiées.

## Fig.1

## Fig.2

## Fig.3

## Fig.4

Fig.5

Fig.6

## Fig.7

## Fig.8

Fig.9

Fig.10

Fig.11

für zRy

ML (y1)    SL (y2)    ML (y3)

126

z

130    128    132

yRy

134

y1    y2    y3

y

Fig.12

zRy

146
144
130
142

136
138
140
128

148
150
152    z
132

GF

y1    y2    y3    y

Fig.13

delta_zRy

z

158

156    154

y1    y2    y3    y

Fig.14

Fig.15

$$F(P) = (1 - dz)(1 - dy) \, F(A)$$
$$+ (1 - dz) \quad dy \, F(B)$$
$$+ \quad dz(1 - dy) \, F(C)$$
$$+ \quad dz \quad dy \qquad F(D)$$

Fig.16

Fig.17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3334460 A1
- DE 19518268 A1
- US 4939678 A